# EUROPEAN PATENT SPECIFICATION

(11) **EP 3 377 780 B1**
(45) Date of publication and mention of the grant of the patent: **18.12.2019**
(21) Application number: 16797988.9
(22) Date of filing: 12.10.2016
(51) Int. Cl.: F16C 7/02, F16C 9/06

(54) **A CLOSING SYSTEM FOR A CONNECTING ROD AND FOR ANY TWO-PART SUPPORT OF A ROTATING SHAFT**
VERSCHLUSSSYSTEM FÜR EINE PLEUELSTANGE UND FÜR ZWEITEILIGE STÜTZHALTER EINER DREHWELLE
SYSTÈME DE FERMETURE DE BIELLE ET POUR TOUT SUPPORT EN DEUX PARTIES D'ARBRE ROTATIF

(30) Priority: 17.11.2015 IT UB20155675
(43) Date of publication of application: 26.09.2018
(73) Proprietor: Politecnico di Torino, 10129 Torino (IT)
(72) Inventor: ROSSO, Carlo, 10129 Torino (IT); RAVIOLO, Emanuele, 10129 Torino (IT); DELPRETE, Cristiana, 10129 Torino (IT)
(74) Representative: Lisa, Elisabetta
(86) International application number: PCT/IB2016/056098
(87) International publication number: WO 2017/085575

(56) References cited:
- DE-T2- 69 006 340
- DE-T2- 69 006 340
- GB-A- 2 119 475
- GB-A- 2 171 489

## Description

### TECHNICAL FIELD

The present invention relates to the field of mechanical members, particularly to connecting rods according to the preamble of claim 1.

More generally the present invention relates to any two-part support of a rotating shaft, and preferably camshafts and crankshafts.

### PRIOR ART

A connecting rod is a mechanical member acting for rigidly connecting together a member having a reciprocating rectilinear motion (such as for example a piston) and a member having a rotary motion (for example driving shaft).

Generally the connecting rod provides three components: a connecting rod body (or shank) provided at one end with a hole wherein a gudgeon pin is inserted which connects it with the member having a rectilinear motion; a connecting rod cap that forms with the shank, at its opposite end, a circular seat engaging in the member provided with rotary motion through a bearing; one or more fastening elements that keep the connecting rod pressed to the shank.

Conventionally the fastening elements are threaded elements, such as for example bolts, that pass through a seat of the connecting rod cap and of the connecting rod body, protrude therefrom and are tightened by a nut such to apply a pre-loading to the bearing. Such solutions further provide to use wedge-like elements, as an alternative to the nut or together thereto, to lock the fastening element against the connecting rod cap and the connecting rod body.

Examples of such connecting rods are known from patents US 4541304, US 4836044 and GB 2171489 and from patents GB 21119475 A and DE 69006340 T2.

Particularly, GB 21119475 is referred to a connecting rod that has at one end thereof two leg portions formed in forked configuration defining therebetween an intermediate groove having a recess of semi-circular cross section on the inside thereof and having oppositely located bolt insertion holes at the leading ends thereof, respectively. In the other side of the intermediate groove is fitted a block having a semi-circular recess defining a crankshaft bearing hole in opposed relationship with said semi-circular recess of the intermediate groove and having a bolt insertion hole formed therethrough and extending coaxially with each of the bolt insertion holes so as to tighten up and fixedly secure the block between the leg portions by a bolt and nut unit.

DE 69006340 T2 is referred to a connecting rod that has a central body made of composite material and suitable for taking up traction and compression forces. A composite material little end is fixed to a first end of the central body and connected thereto by a first strap bearing against the little end and against the first end of the central body. A composite material big end comprising an inner half is fixed to the second end of the central body. The big end has an outer half pressed against the inner half by a second strap bearing against the other half and against the second end of the central body and means for pre-stressing the second strap.

However such solutions have the drawback of using, as the fastening elements, threaded elements. The latter can easily cause failure cracks if connecting rods made of materials different from metals are made; moreover, in operating conditions, due to compressive cyclic stresses (due for example to gas pressure at the top dead centre) or to tensile cyclic stresses (due to inertia force at high speed during charge change) to which the connecting rod is subjected, such elements involve also a load loss of the same amount at the connecting rod body/connecting rod cap interface, running the risk of separating the parts in contact with each other.

A further drawback of these connecting rods is the fact that the surface of the wedge-like elements in contact with the connecting rod cap is asymmetrical with respect to the line of action of the resultant of the inertia forces along their line of action, or it generates a non-uniform distribution of the pre-loading, resulting in distortions to the connection with the connecting rod cap and increasing the risk of breaking the oil film useful for the lubrication.

### OBJECTS AND SUMMARY OF THE INVENTION

The object of the present invention is to overcome prior art drawbacks.

In particular it is the object of the present invention to provide a connecting rod, and more generally, any two-part support of a rotating shaft that allows load losses at the body/cap interface to be decrease.

It is also an object of the present invention to provide a connecting rod and, more generally, any two-part support of a rotating shaft that has a uniform distribution of the pre-loading.

A further object of the present invention is to provide a connecting rod and, more generally, any two-part support of a rotating shaft that can be made of materials different from metal.

These and other objects of the present invention are achieved by a connecting rod embodying the characteristics of the annexed claim 1, which forms an integral part of the present description.

Moreover these and other objects of the present invention are achieved by any two-part support of a rotating shaft embodying the characteristics of the annexed claim 7, which forms an integral part of the present description.

Moreover these and other objects of the present invention are achieved by any two-part support of a camshaft.

Moreover these and other objects of the present invention are achieved by any two-part support of a crankshaft.

Preferred embodiments and variants of the present invention are the subject matter of the dependent claims 2 to 6.

The idea at the base of the present invention is to provide any two-part support of a rotating shaft, and particularly a connecting rod, equipped with a closing system with a translation constraint.

More precisely the present invention provides to make a connecting rod comprising a connecting rod body provided with a hole at one end and with two arms at the opposite end, shaped such to define therebetween a circular arc. The connecting rod further comprises a connecting rod cap intended to be inserted between the two arms and provided with an indentation shaped such that, when the connecting rod cap is inserted between the two arms, the indentation forms with the circular arc a circular opening. The connecting rod further comprises a seat, obtained on the connecting rod cap and on the arms, housing a fastening element, and two wedges, inserted in the seat between the fastening element and the connecting rod cap to lock the connecting rod cap, particularly two surfaces thereof, against corresponding shoulders of the arms of the connecting rod body.

More in details, the fastening element is a beam-shaped element whose section increases from the ends towards the centre, and each one of the two wedges is inserted in the seat of a respective arm of the connecting rod body, and is arranged in such a manner to have a surface in contact with the connecting rod cap; wedges through the contact surface form a force path from the connecting rod cap to the fastening element, that in turn ends the path by discharging the force on the seat of the element formed in each one of the arms. The wedges, through such surface, form a force path from the connecting rod cap to the fastening element, that in turn ends the path, by discharging the force on the seat of the element obtained in each one of the arms. The contact surface between the wedges and the connecting rod cap is arranged in a plane orthogonal to a straight line passing through the geometric centre of the hole and of the circular opening.

Still more in details, the beam-shaped fastening element and the two wedges, each one inserted through its own arm, form a load path that presses the element against the connecting rod, discharging such compression force on the portions of the arms of the connecting rod; therefore the fastening element is in contact with the two arms of the connecting rod in the contact area and with the wedges at the opposite side, while the wedges are in contact on one side with the fastening element and on the other side with the connecting rod cap; any other interference is suitably avoided with sufficient clearances.

Such solution allows the connecting rod to be provided with high efficiency as regards resistance to stresses to which it is subjected, in particular to tensile stresses that, under operating conditions, tend to move the connecting rod cap away from the connecting rod body. The particular geometry of the contact interface of the two components, allows load losses to decrease, applied with the fastening element and wedges.

In one embodiment of the invention the connecting rod cap is slidingly inserted between the two arms by a guide/track coupling between two sides of the connecting rod cap and two sides of the two arms.

Such solution involves a constant, uniform and symmetric distribution of the pre-loading on the connecting rod cap since it allows the assembly to be stiffened and it allows arms to be prevented from being bent outwardly in the mounting step and in operating conditions.

In a variant embodiment the seat housing the fastening element comprises two shoulders facing each other, each one obtained on a respective arm and in contact with a respective end of the fastening element, such to prevent the fastening element from translating along a direction parallel to the development direction thereof.

Such solution allows a further improvement of the efficiency of the connecting rod to be obtained in terms of resistance to stresses, since it makes it possible to avoid the use of threaded fastening elements that need grasping elements for being tightened on the connecting rod body. Thus the risk of triggering failure cracks compromising the mechanical performances of the connecting rod is reduced.

A further variant of the present invention provides the characteristics just described to be used in synergy, and it provides the surprising effect of making a connecting rod of materials different from metal materials, such as for example thermoplastic materials. In this case the use in combination of a fastening element not provided with threading, inserted in a seat comprising shoulders between arms, and a connecting rod cap inserted in the connecting rod body through a prismatic guide and provided with a surface allowing a fastening pre-loading, whose distribution is uniform and symmetric, to be applied through suitably shaped wedges, allows the dynamic response to stresses of the connecting rod to be improved (for example inertia forces in the top dead center due to drawing action of piston and gudgeon pin).

Such configuration allows the connecting rod system to reply in an overall manner to stresses and therefore it is possible to make the connecting rod of materials lighter than metals, such as for example highly performing plastics or composite materials, that reduce the mass, inertias and consequently frictions thereof.

This will be more clear in short with the description of the numerical investigations performed.

Further advantageous characteristics of the present invention will be more clear from the description below and in the annexed claims, which are an integral part of the present invention.

### BRIEF DESCRIPTION OF DRAWINGS

The invention will be described below with reference to some not limitative examples, provided by way of example and not as a limitation in the annexed drawings. These drawings show different aspects and embodiments of the present invention and, where appropriate, reference numerals showing like structures, components, materials and/or elements in different figures are denoted by like reference numerals.
Figure 1 is a view of a section along a longitudinal axis of a connecting rod according to the invention;
figures 2A, 2B and 2C are a view of a section along a longitudinal axis, a side view and top view of a first detail - the connecting rod body - of the connecting rod of figure 1;
figures 3A, 3B and 3C are a view of a section along a longitudinal axis, a side view and a top view of a second detail - the connecting rod cap- of the connecting rod of figure 1;
figures 4A and 4B are a side view and a front view of a third detail - the fastening element - of the connecting rod of figure 1;
figures 5A and 5B are a side view and front view of a fourth detail - the wedge - of the connecting rod of figure 1;
figure 6 is an exploded perspective view of any two-part support of a rotating shaft equipped with a closing system with translation constraint according to the present invention;
figure 7 is a view of a section along a longitudinal axis of any two-part support of figure 6;
figures 8A and 8B are a perspective view and an exploded perspective view of a two-part support of a camshaft equipped with a closing system with a translation constraint according to the present invention;
figures 9A and 9B are a perspective view and an exploded perspective view of a two-part support of a crankshaft equipped with a closing system with a translation constraint according to the present invention;
figures 10A and 10B are the tensile condition of the components of a conventional closing system compared with the one of a closing system with translation constraint according to the present invention respectively;
figures 11A and 11B are the tensile condition of the cap of a conventional closing system compared with the one of a closing system with translation constraint according to the present invention respectively; and
figures 12A and 12B are the contact pressure in a conventional closing system compared with the one of a closing system with translation constraint according to the present invention.

### DETAILED DESCRIPTION OF THE INVENTION

While the invention is susceptible of various modifications and alternative constructions, some non-limitative embodiments, provided by way of example, are described in details herein below.

It should be understood, however, that there is no intention to limit the invention to the specific disclosed embodiments but, on the contrary, the invention intends to cover all the modifications, alternative constructions and equivalents that fall within the scope of the invention as defined in the claims.

In the description below therefore the use of "for example", "etc.", "or" denotes non-exclusive alternatives without limitation, unless otherwise noted; the use of "also" means "among which, but not limited to" unless otherwise noted; the use of "includes" means "includes, but not limited to", unless otherwise noted.

References to "upper", "lower", "above", "below" and the like are to be intended with reference to an operating condition that is an installed condition of the closing system, unless otherwise noted.

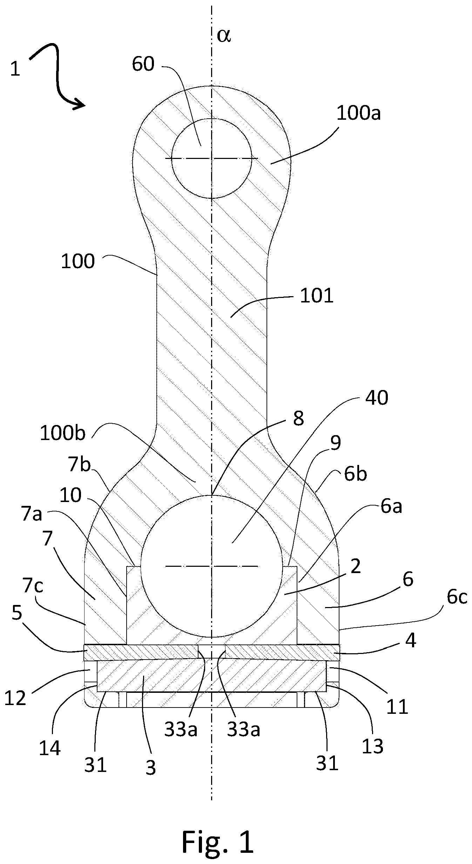

Figure 1 shows a connecting rod 1 according to the present invention. The connecting rod 1 comprises a connecting rod body 100, a connecting rod cap 2, a fastening element 3, and two wedges 4,5.

The connecting rod body 100 comprises a central area 101, preferably with a rectangular geometry and a substantially constant section, and two ends 100a,100b; it is clear for the person skilled in the art that the connecting rod body 100 can have geometries and sections different from the one described herein. The end 100a is passed through by a hole 60 inside which a bearing and a gudgeon pin are typically housed for connecting the connecting rod to a mechanical member having a reciprocating rectilinear motion, such as a piston.

At the opposite end 100b on the contrary the connecting rod body has two arms 6,7, provided with respective inner walls 6a,7a and outer walls 6b,7b. Specifically, the inner walls 6a,7a of the two arms are connected in such a manner to define therebetween an area delimited by a semi-circular profile 8, at the end 100b of the connecting rod body.

Moreover on the inner walls of the two arms, and at the ends of the semi-circular profile 8, two first shoulders 9, 10 are formed which are symmetric with respect to a straight line α joining the geometric centers of the hole 60 and of the semi-circular profile 8, intended to receive, by abutment, a connecting rod cap 2.

At the lower ends 6c,7c of the two arms two openings 11 and 12 are formed respectively symmetric with respect to the straight line α, and each one passing through the thickness of the respective arm.

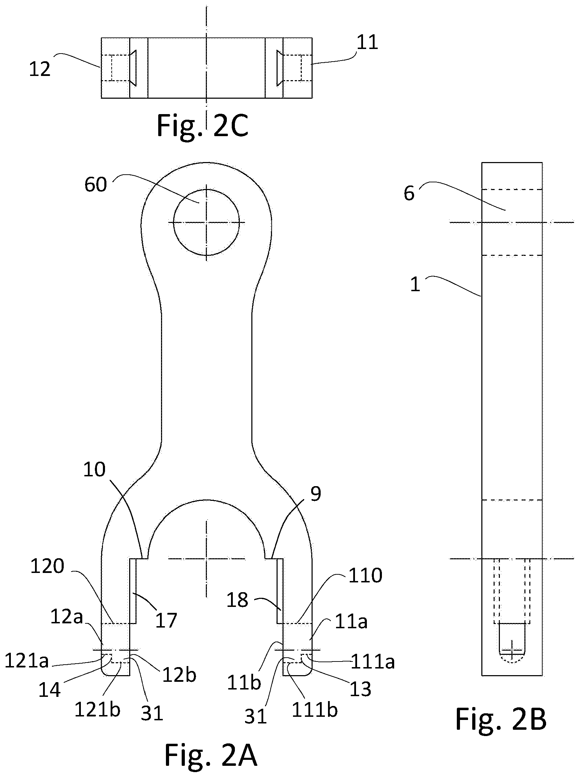

As visible in figures 2A, 2B e 2C, each one of the two openings 11,12 comprises a first 11a,12a and a second 11b,12b section with different size respectively, wherein each one of the two sections is delimited by an upper surface 110,120, a lower surface 111a,111b,121a,121b and side surfaces respectively.

The first section 11a,12a, taken at the outer walls of the arms, has a rectangular profile, the second section 11b,12b on the contrary, taken at the inner walls of the arms, has a size higher than the first section 11a,12a and it has a rectangular-shaped profile at the upper surface 110,120 and at the side surfaces, while it has a curvilinear-shaped profile at the lower surface 111b,121b.

Thus the two openings 11 and 12 determine on the respective arms two second shoulders 13,14 and a seat 31 intended to house a fastening element 3 described more in details below.

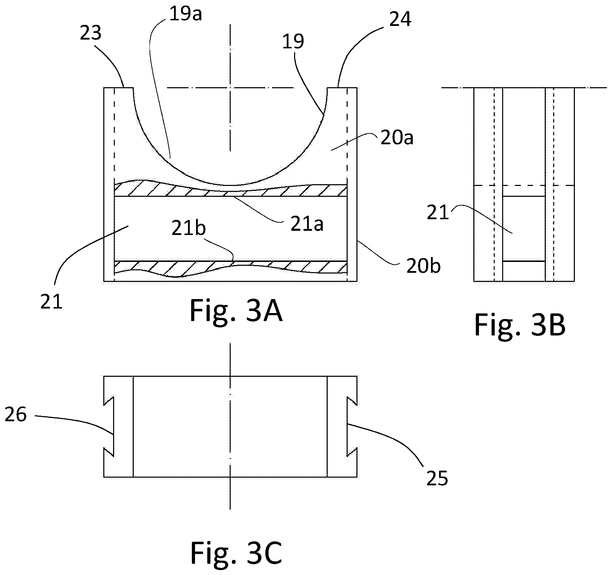

Moreover on the portion of the inner walls 6a,7a of each arm 6,7 between the first shoulders 9 and 10 and the upper surface 110,120 of the openings 11,12, there is provided a prismatic guide 17,18 that, in the disclosed example, has a dovetail geometry. Such guide is coupled with a respective track 26,25, visible in figures 3A, 3B and 3C, present on the sides of the connecting rod cap 2 in such a manner that, once the connecting rod cap is inserted between the two arms, it is constrained to the connecting rod body, and therefore it is prevented from translating along an axial direction.

The preferred solution described above has the advantage of being the most mechanically strong one.

It is clear that, in variant embodiments, the guide/ track coupling can be reversed, that is by providing the prismatic guide on the sides of the connecting rod cap and the respective track obtained on the inner walls of the arms, and moreover to provide different coupling geometries; however such solution would cause the arms to be weakened.

Moreover the presence of such guide/track coupling between the connecting rod cap 2 and the connecting rod body 100 allows the assembly to be stiffened and prevents the arms 6, 7 of the connecting rod body 100 from outwardly bending both upon the assembling and in operating conditions.

With reference to figures 3A, 3B, 3C, the connecting rod cap 2 comprises an upper area 20a and a lower area 20b. In details, the upper area 20a comprises an indentation 19a provided with a semi-circular profile 19 with a diameter equal to the diameter of the semi-circular profile 8 defined by the inner walls 6a,7a of the two arms.

Thus the connecting rod cap 2, once inserted, forms with the two arms 6,7 of the connecting rod body 100 a circular opening 40 - clearly visible in figure 1 - the latter intended to house a bearing and/or a connecting rod pin.

At the end of the semi-circular profile 19 of the connecting rod cap 2 there are provided two surfaces 23, 24 that, with the connecting rod cap in the mounted condition, are pushed in contact with the first shoulders 10,9 obtained on the arms 6,7 of the connecting rod body 100 respectively.

The lower area 20b of the connecting rod cap 2, on the contrary comprises a through hole 21 with an inner upper wall 21a and an inner lower wall 21b facing each other.

In the shown example, the through hole 21 has a rectangular geometry section constant for the whole length thereof, and it is placed in such a manner that, once the connecting rod cap 2 is inserted, the inner upper wall 21a is substantially aligned with the upper surface 110,120 of the openings 11, 12 and the inner lower wall 21b is substantially aligned with the seat 31 of the two arms; it has to be specified that said elements are not perfectly aligned after inserting the wedges, but little clearance is provided to be present therebetween.

The through hole 21 and the seat 31, are intended to house the fastening element 3, that once inserted between the two openings 11, 12 is housed between the second shoulders 14, 13 of the arms.

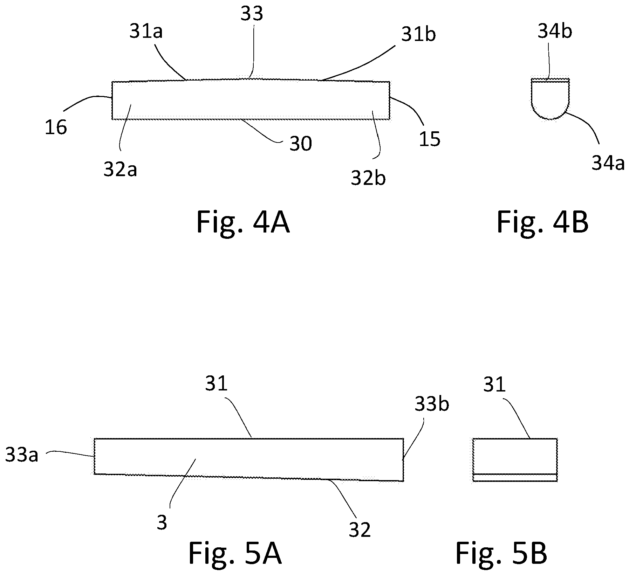

In the embodiment shown in figures 4A and 4B, the fastening element 3 is a beam-shaped element whose section increases from the ends towards the center, and it comprises a lower surface 30 and two upper surfaces 31a,31b each one connecting respective ends 32a,32b of the fastening element 3 to the center line 33.

The section transverse to the development direction of the fastening element 3 has a curvilinear profile 34a at the lower surface 30 and a planar profile 34b at the upper surfaces 31a,31b.

In the example described herein, the fastening element 3 has the curvilinear profile 34a of the lower surface 30 for whole the length thereof, but generally it is necessary for the element 3 to be provided with such profile at its ends 32a,32b.

Moreover in order to obtain the increase in the section from the ends 32a,32b towards the center line 33 of the element 3, each one of the two upper surfaces 31a,31b is inclined, with respect to the development direction of the element 3, and with the same slope.

The inclination degree of each one of the two upper surfaces 31a,31b ranges from 1.4° to 1.6° and preferably it is 1.5°.

In particular, the curvilinear-shaped profile of the lower surface 111b,121b of the openings 11,12 obtained on the arms, is coupled with the curvilinear profile 34a of the lower surface 30 of the fastening element 3. Thus the two ends 32a,32b of the fastening element 3 rest in the seat 31 obtained in the respective arms 6,7, allowing stresses to be better distributed in operating conditions.

The two second shoulders 13,14 on the contrary are in contact with the surfaces 15,16 respectively of the ends 32b,32a of the fastening element 3, thus preventing the latter from translating in the longitudinal direction.

With reference again to figure 1, the connecting rod 1 comprises also two wedges 4,5 inserted in the seat between the fastening element 3 and the connecting rod cap 2 to lock the connecting rod cap 2, in particular two surfaces 23, 24 thereof against corresponding first shoulders 10,9 of the arms 6,7 of the connecting rod body 100; the fastening element 3 is a beam-shaped element whose section increases from the ends towards the center, and each one of the two wedges 4,5 is inserted in the seat of a respective arm of the connecting rod body, and is arranged in such a manner to have a surface 31a,31b in contact with the connecting rod cap 2; the wedges 4,5 through the contact surface 31a,31b form a force path from the connecting rod cap 2 to the fastening element 3, that in turn ends the path by discharging the force on the seat 31 of the element 3 obtained in each one of the arms 6,7; the contact surface 31a,31b therefore is arranged in a plane orthogonal to a straight line passing through the geometric center of the hole 60 and of the circular opening 40 and it is not in direct contact with the arms 6,7 that is with their surfaces 110,120, but between the contact surface of the wedge 31a,31b and, respectively, the surfaces 110,120 of the arms 6,7 there is little clearance but the connecting rod 1 is closed and is constrained to translation.

Such as visible in the embodiment shown in figures 5A and 5B, each one of the two wedges 4,5 is a rectangular section prismatic element comprising at the top a contact surface 31, at the bottom an inclined surface 32, an outer end 33b and inner end 33a, and their section decreases in size from the outer end to the inner end.

The wedges 4,5 are inserted through the opening 11 and 12 and are pushed by being pressed into the through hole 21 till the contact of the respective inner ends 33a.

Therefore once the wedges are inserted in the connecting rod 1, the contact surface 31 of each wedge is in contact with the inner upper wall 21a of the through hole 21 and it is in contact, but with little clearance, with the upper surfaces 110, 120 of the openings 11, 12 of the arms 6,7 such that a plane comprising the contact surface 31 of each wedge is orthogonal to a straight line passing through the geometric centre of the hole 60 and of the circular opening 40.

The pressure exerted by the two wedges tends to push upwardly the connecting rod cap 2 tightening the two surfaces 23 and 24 against the first shoulders 10 and 9 respectively obtained on arms 7 and 6 of the connecting rod body 100.

Moreover the inclined surface 32 of each wedge has a slope ranging from 1.4° to 1.6°, preferably equal to 1.5°, and it is in contact with a corresponding inclined surface 31a,31b of the fastening element 3 such to prevent the two wedges from making a backwards movement.

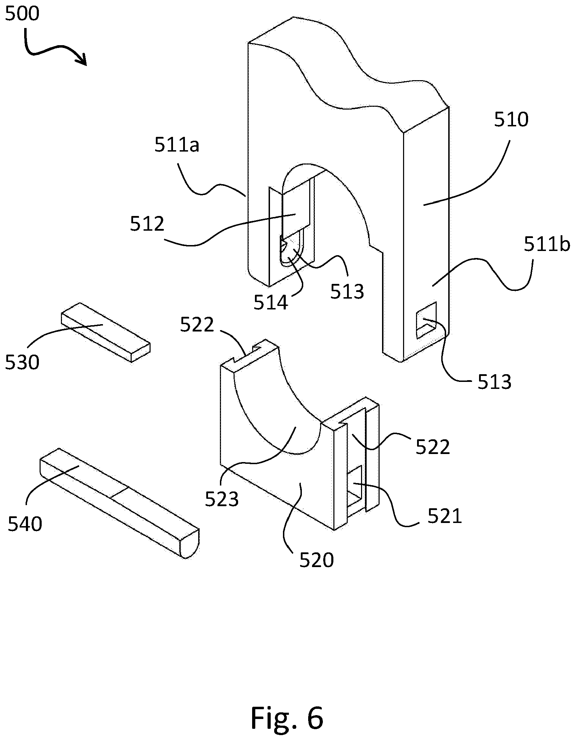

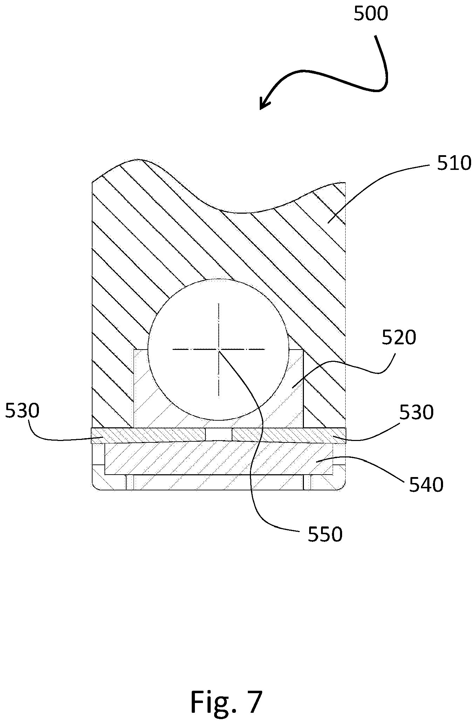

Another more general aspect of the present invention provides any two-part support 500 of a rotating shaft provided with a closing system with translation constraint. Such two-part support 500 of a rotating shaft (not shown) is shown in figures 6 and 7, comprises:
- a body 510 comprising two arms 511a, 511a shaped such to define therebetween a circular arc, each one comprising a prismatic guide 512, an opening 513 and a seat 514,
- a cap 520 comprising a hole 521 and a pair of tracks 522 and intended to be removably inserted between said two arms 511a, 511b by the insertion of prismatic guides 512 of the body 510 in the tracks 522 of the cap 520, said cap 520 being provided with an indentation 523 shaped such that when the cap is inserted between the two arms 511a, 511b the indentation forms with the circular arc formed by the arms 511a, 5aab a circular opening 550,
- two wedges 530 intended to be inserted in the openings 513 of the body 510, and
- a fastening element 540 intended to be inserted in the hole 521 of the cap 520 and in the seats 514 of the body 510.

The fastening element 540 is a beam-shaped element whose section increases from the ends to the center; the two wedges 530 are placed in contact with the cap 520 and are arranged such that their contact surface is in a plane orthogonal to a straight line passing through the geometric center of the circular opening 550.

When the cap 520 is coupled to the body 510 by inserting the prismatic guides 512 in the tracks 522, the two wedges 530 are inserted in the openings 513 and the fastening element 540 is inserted in the hole 521 and in seats 514, the two-part support 500 is closed and constrained to translation.

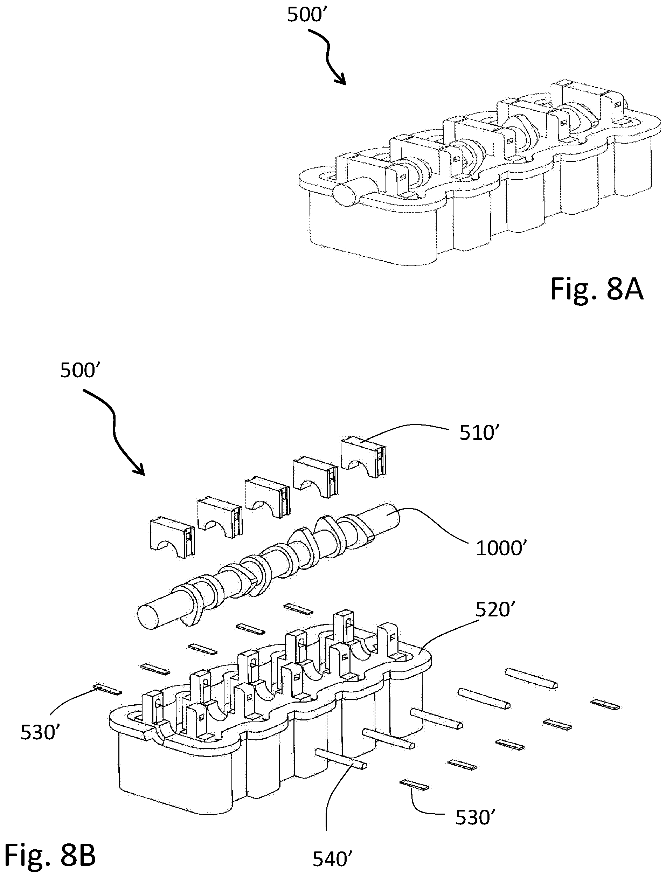

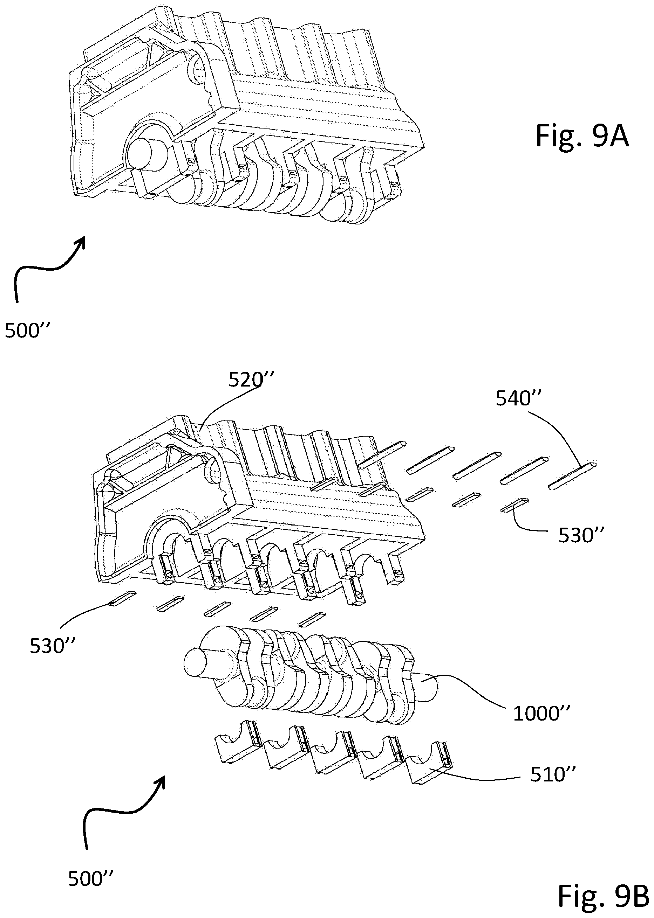

Variant embodiments of the more general aspect of the present invention described above are shown in figures 8A and 8B and 9A and 9B.

In particular figures 8A and 8B show an application of the two-part support 500' of a camshaft 1000' equipped with a closing system with translation constraint according to the present invention comprising at least:
- a body 510',
- a cap 520',
- two wedges 530', and
- a fastening element 540'
wherein, when the cap 520' is coupled with the body 510', the two wedges 530' and the fastening element 540', suitably shaped and placed as described above for the general form of the invention, make the camshaft 1000' constrained to translation.

Figures 8A and 8B show a first possible implementation of the present invention for fastening a camshaft. Similarly to what described above for the connecting rod, also in this case the closing system according to the present invention is implemented by eliminating screws (in prior art the caps of the supports are closed by screws tightening on respective supports) and accordingly reducing the stress condition of the components.

In particular figures 9A and 9B show an application of the two-part support 500" of a crankshaft 1000" equipped with a closing system with translation constraint according to the present invention comprising at least:
- a body 510",
- a cap 520",
- two wedges 530", and
- a fastening element 540"
wherein, when the cap 520" is coupled with the body 510", the two wedges 530" and the fastening element 540", suitably shaped and placed as described above for the general form of the invention, make the crankshaft 1000" constrained to translation.

Such as shown in figures 9A and 9B showing the assembled and exploded views of a second possible implementation of the invention for mounting a crankshaft on a base, the closing system according to the invention can be also used for constraining a crankshaft with respect to the main bearings.

Even in this case it is possible to avoid the use of screws for the connection and to obtain a less stressed system and therefore a lighter system.

From the above description it is clear how the connecting rod 1 and more generally any two-part support 500,500',500" allow the above objects to be achieved.

It is clear, for a person skilled in the art, that it is possible to make changes and variants to the solution described with reference to the above figures without for this reason departing from the scope of protection of the present patent as defined by the annexed claims.

For example, the guide/track connection between the cap (of the connecting rod or of the two-part support) and the arms of the body (of the connecting rod or of the two-part support) can be replaced by another type of connection, for example a form fit or by means of removable fastening elements, e.g. screws passing through the arms in a direction parallel to the development direction of the fastening element 3, 540.

Even if less convenient than the solution described above, the seat housing the fastening element 3,540 may be not provided with shoulders for holding the fastening element. In this case, suitable means should be provided to prevent the fastening element from moving in a direction orthogonal to the straight line α, for instance, the fastening element could protrude from the arms of the body (of the connecting rod or of the two-part support) and at the ends thereof bolts can be provided or wedges can have a square abutting against the side surface of the fastening element 3, 540 by a screw.

### NUMERICAL INVESTIGATIONS: TESTS AND RESULTS

Now the efficacy of the present invention is proved by means of a series of tests, for comparing the present invention with prior art solution; particularly three behaviors have been tested: the tensile condition of the components, the tensile condition in the cap and contact pressure.

Although tests have been carried out on connecting rods, the selected examples have not to be intended as limiting the present invention, but only for illustrative purposes. The main problem of a connecting rod is the preload loss that can occur upon the contact between connecting rod cap and connecting rod body. Such particular condition occurs when the connecting rod is subjected to a tensile force due to accelerations of the piston. In order to avoid such preload loss, that involves a possible span and resulting in breaking the oil film, a sufficient tightening is applied to the closing screws to guarantee that the load reduction on the contact is within acceptable values; this, accordingly, leads to a great stress on the cap and on the screws, that is considerably increased due to the external tensile force.

Such behavior is not consistent with the use of thermoplastic materials, whose mechanical strength is considerably lower than that of steel.

In the solution according to the present invention such problem is overcome since the preloading due to the tightening of wedges is necessary for forcing and maintaining the contact; the tensile force is discharged on the beam-shaped fastening element and on wedges, and therefore on the connecting rod body. Such force path guarantees very reduced stress levels, and contemporaneously it allows the contact between connecting rod cap and connecting rod body to be maintained.

In order to make clear the advantages of the present invention a numerical comparison has been performed between a solution available on the market and usually used for a connecting rod in an automotive motor and an equivalent solution that implements the technical solution suggested by the present invention. Materials and geometries are different since the conventional solution is made with a conventional geometry and currently present on the market and a C70 steel, while the connecting rod implementing the solution provided by the present invention is made of thermoplastic material, particularly PEEK 90HMF40, and it has a different geometry but such a geometry to meet the same stiffness and strength requirements of that made of steel. The loading and constraint conditions are similar for both the mathematical models; there is a slight difference in the tensile force due to the less inertia force for the connecting rod made of plastic material.

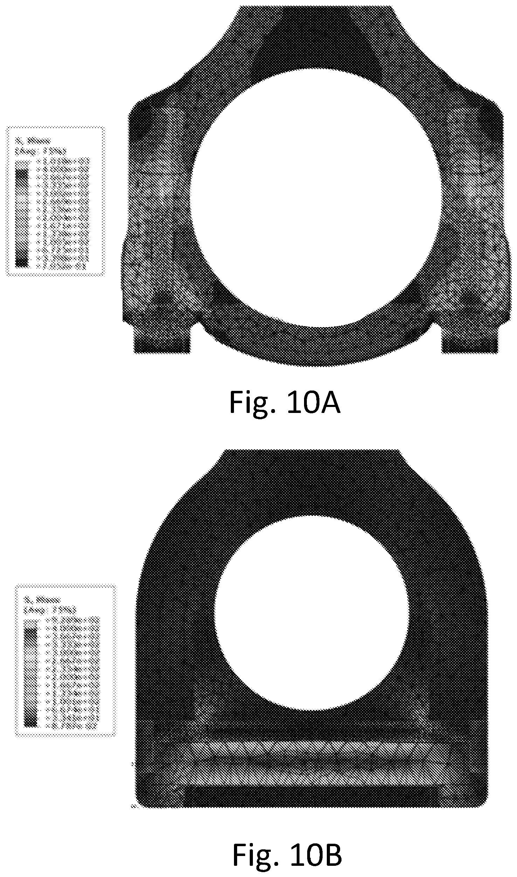

Figures 10A and 10B, 11A and 11B, 12A and 12B show the obtained results.

The comparison in absolute numerical terms is not very significant, since steel has a yield about of 550 MPa , while PEEK 90HMF40 has a strength of about 250 MPa at a temperature of 100°C (temperature, on average, of the connecting rod small end); figures 10A and 10B, 11A and 11B, 12A and 12B however are useful for verifying how the tensile condition is lower in the suggested solution and consistent with the material strength.

With reference to figures 10A and 10B the tensile condition in the components of a standard solution and of a closing system with translation constraint according to the present invention are compared; in particular it has to be noted that the tensile condition in the case shown in figure 10B is more homogeneous and less high than in the conventional solution shown in figure 10A.

For completeness purposes, it is specified that the legend of figures 10A and 10B shows the equivalent tensile stress of Von Mises (S, Mises); numerical data are expressed in MPa.

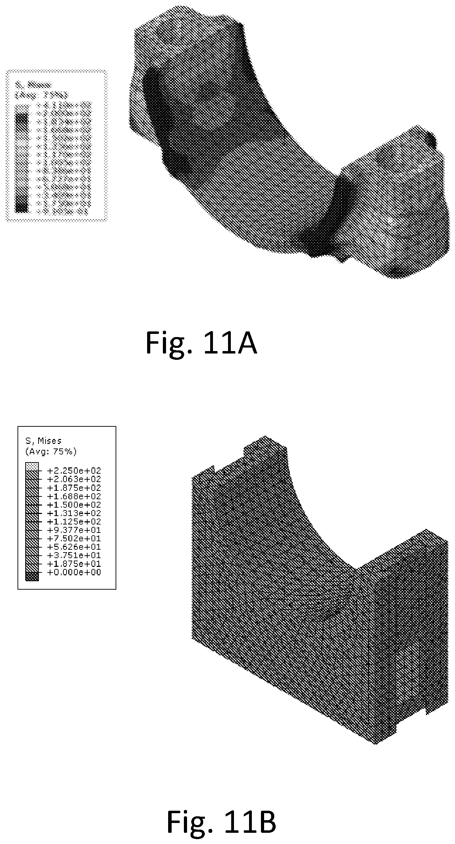

With reference to figures 11A and 11B here the tensile condition of the cap of a standard solution and the one of a closing system with translation constraint according to the present invention are compared; in particular as already seen on the assembled view, it has to be noted that even if the tensile load on the two connecting rods has not the same intensity, but it differs for some percentage points, the load on the cap is much lower and more homogeneous in the case shown in figure 11B, according to the invention, compared with the case according to prior art shown in figure 11A.

For completeness purposes, it is specified that the legend of figures 11A and 11B shows the equivalent tensile stress of Von Mises (S, Mises); numerical data are expressed in MPa.

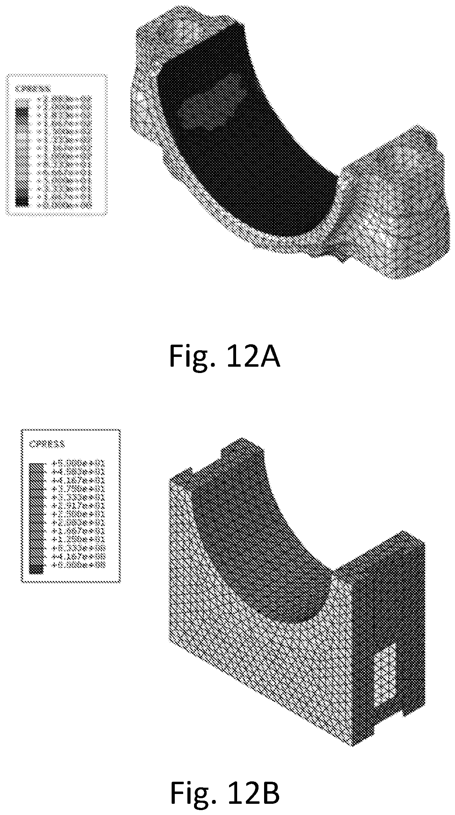

With reference to figures 12A and 12B they show the comparison of the contact pressure in a standard solution and in the one of a closing system with translation constraint according to the present invention; in particular it has to be noted how the contact pressure is more uniform and lower in figure 12B and therefore how the solution of the present invention leads to a less stress of the material, thus allowing the closing system to be made also with materials having lower mechanical property, such as thermoplastic materials. In such comparison it has to be noted how the overload due to the presence of screws and the need of increasing the load to maintain the contact between the surfaces is higher than that necessary in the system according to the invention; If screws are used, the preload in the contact area is more than twice the one of the suggested solution. Moreover the preload reduction due to the application of the tensile force is less notable; in this case with an external action of about 7,000 N, the preload passes from 3,850N to 1,550 N for the connecting rod that implements the solution of the present invention, while in the conventional one, with a screw tensile force of about 14,500 N, the preload on the contact surfaces is reduced to 3,400 N.

For completeness reasons, it has to be specified that the legend near the figures 12A and 12B shows the pressure exerted upon contact (CPRESS); numerical data are expressed in MPa.

From the above description therefore it is clear how the closing system for connecting rod and for any two-part support of a rotating shaft according to the present invention allows the above objects to be achieved.

It is also clear for a person skilled in the art that it is possible to make changes and variants to the solution described with reference to the annexed figures, without for this reason departing from the teaching of the present invention and from the scope of protection as defined in the annexed claims.

## Claims

1. A connecting rod (1) comprising:
- a connecting rod body (100) comprising a hole (60) at one end and two arms (6,7) at the opposite end shaped such as to define therebetween a circular arc,
- a connecting rod cap (2) removably inserted between said two arms (6,7), said connecting rod cap being provided with an indentation (19a) shaped in such a way that, when the connecting rod cap is inserted between the two arms (6,7), the indentation forms a circular opening (40) with the circular arc formed by the arms of the connecting rod body,
- a seat (21,31) obtained on said connecting rod cap (2) and on said arms (6,7) into which a fastening element (3) is housed,
- two wedges (4,5) inserted in said seat between the fastening element and the connecting rod cap,
**characterized in that**
- the fastening element (3) is a beam-shaped element whose section increases from the ends towards the center, said fastening element (3) being inserted in a seat (31) of the body 100 between two openings (11, 12) and housed with suitable means to prevent said fastening element (3) from moving in a direction orthogonal to a straight line α passing through the geometric center of the hole (60) and the circular opening (40),
- the two openings (11,12) are formed respectively symmetric with respect to the straight line α, and each one passes through the thickness of the respective arm (6,7),
- each of the two wedges (4,5) is inserted in the seat through a corresponding arm of the connecting rod body and is arranged so as to have a contact surface (31a,31b) put in contact with the connecting rod cap (2), the contact surface (31a,31b) being arranged in a plane orthogonal to the straight line α.

2. Connecting rod (1) according to claim 1, wherein the connecting rod cap is slidingly inserted between the two arms (6,7) by a guide/track coupling between two sides of the connecting rod cap (2) and two sides of the two arms (6,7).

3. Connecting rod (1) according to claim 1 or 2, wherein the seat (31) comprises said suitable means to prevent said fastening element from moving comprise two second shoulders (13,14) facing each other, and wherein each of said second shoulders (13,14) is obtained on a corresponding arm of said two arms (6,7) and is in contact with a corresponding end (32b,32a) of said fastening element (3), so as to prevent the fastening element (3) from translating along a direction parallel to the development direction of said fastening element (3).

4. Connecting rod (1) according to any of the preceding claims, wherein the fastening element (3) is provided with an upper surface (31a,31b) and a lower surface (30), wherein said upper surface is in contact with the two wedges (4,5) and is provided with a planar profile, and wherein said lower surface is in contact with the seat (31) obtained on said arms and has, in a plane orthogonal to the development direction of the fastening element (3), a semicircular profile.

5. Connecting rod (1) according to any of the preceding claims, wherein the wedges have a section in the shape of a right-angled triangle, wherein the angle between the hypotenuse and the larger base of the right-angled triangle has a value in the range between 1.4° and 1.6°.

6. Connecting rod (1) according to any of the preceding claims, wherein the connecting rod body is made of plastic material having properties of mechanical and thermal resistance.

7. Connecting rod according to any of the preceding claims, wherein
- the two arms (511a,511b) are shaped so as to define therebetween a circular arc, each arm comprising a prismatic guide (512), an opening (513) and a seat (514), said connecting rod also comprising
- a cap (520,520',520") comprising a hole (521) and a pair of tracks (522) and intended to be removably inserted between said two arms (511a,511b) by inserting the prismatic guides (512) of the body (510,510',510") in the tracks (522) on the cap (520,520',520"), said cap (520,520',520") being provided with an indentation (523) shaped in such a way that, when the cap is inserted between the two arms (511a,511b), the indentation forms a circular opening (550) with the circular arc formed by the arms (511a,511b),
- two wedges (530,530',530") intended to be inserted into the openings (513) of the body (510,510',510"), and
- a fastening element (540,540',540") intended to be inserted into the hole (521) of the cap (520,520',520") and in the seats (514) of the body (510,510',510"),
**characterized in that**
- the fastening element (540,540',540") is a beam-shaped element whose section increases from the ends towards the center, said fastening element (540,540',540") being inserted in a seat (514) of the body (510,510',510") between two openings (513) and housed with suitable means to prevent said fastening element (540,540',540") from moving in a direction orthogonal to the straight line α,
- the two wedges (530,530',530") are put in contact with the cap (520,520',520") and arranged in such a way that their contact surface is in a plane orthogonal to a straight line passing through the geometric center of the circular opening (550), and
- when the cap (520,520',520") is coupled to the body (510,510',510") by inserting the prismatic guides (512) into the tracks (522), the two wedges (530,530',530") are inserted into the openings (513) and the fastening element (540,540',540") is inserted into the hole (521) and the seats (514), the two-part support (500,500',500") is closed and constrained to translation.

## Patentansprüche

1. Pleuelstange (1) umfassend:
- einen Pleuelkörper (100) mit einem Loch (60) an einem Ende und zwei Armen (6, 7) am gegenüberliegenden Ende, die derart konfiguriert sind, dass sie einen Kreisbogen zwischen sich definieren,
- einen Pleueldeckel (2), der entfernbar zwischen den beiden besagten Armen (6, 7) eingesetzt ist, wobei der genannte Pleueldeckel mit einer Kerbe (19a) versehen ist, die derart konfiguriert ist, dass beim Einsetzen der Pleueldeckels zwischen den beiden Armen (6, 7) bilden die Kerben eine kreisförmige Öffnung (40) mit dem Kreisbogen, der durch die Arme des Pleuelkörpers gebildet wird,
- einen Sitz (21, 31), der an dem besagten Pleueldeckel (2) und an den besagten Armen (6, 7) ausgebildet ist und in dem ein Befestigungselement (3) untergebracht ist,
- zwei Keile (4, 5), die in den besagten Sitz zwischen dem Befestigungselement und dem Pleueldeckel eingesetzt sind,
**dadurch gekennzeichnet, dass**
- das Befestigungselement (3) ist ein balkenförmiges Element, dessen Querschnitt von den Enden zur Mitte hin zunimmt, wobei das besagte Befestigungselement (3) in einen Sitz (31) des Körpers 100 zwischen zwei Öffnungen (11, 12) eingesetzt ist und durch geeignete Mittel aufgenommen wird, um zu verhindern, dass sich das besagte Befestigungselement (3) in einer Richtung orthogonal zu einer Gerade α bewegt, die durch die geometrische Mitte des Lochs (60) und die kreisförmige Öffnung (40) verläuft,
- die beiden Öffnungen (11, 12) jeweils symmetrisch zur Geraden α ausgebildet sind, und diese jeweils die Dicke des jeweiligen Arms (6, 7) kreuzen;
- jeder der beiden Keile (4, 5) wird durch einen entsprechenden Arm des Pleuelkörpers in den Sitz eingeführt und derart angeordnet, dass eine Kontaktfläche (31a, 31b) mit dem Pleueldeckel (2) in Kontakt kommt, wobei die Kontaktfläche (31a, 31b) ist in einer Ebene senkrecht zur Geraden α angeordnet.

2. Pleuelstange (1) nach Anspruch 1, wobei der Pleueldeckel mittels einer Führungs-/Spurkopplung zwischen zwei Seiten des Pleueldeckels (2) und zwei Seiten der beiden Armen (6, 7) gleitend eingeschoben ist.

3. Pleuelstange (1) nach Anspruch 1 oder 2, wobei der Sitz (31) die besagten geeigneten Mittel zum Verhindern des Bewegens des besagten Befestigungselements und zwei einander zugewandte zweite Schultern (13, 14) aufweist, und wobei jede der besagten zweiten Schultern (13, 14) an einem entsprechenden Arm der besagten beiden Arme (6, 7) ausgebildet ist und mit einem entsprechenden Ende (32b, 32a) des besagten Befestigungselements (3) in Kontakt steht, um zu verhindern, dass sich das Fixierelement (3) entlang einer Richtung parallel zur Entwicklungsrichtung des besagten Befestigungselements (3) bewegt.

4. Pleuelstange (1) nach einem der vorhergehenden Ansprüche, wobei das Befestigungselement (3) mit einer oberen Fläche (31a, 31b) und einer unteren Fläche (30) versehen ist, wobei die besagte obere Fläche in Kontakt mit den beiden Keilen (4, 5) steht und mit einem flachen Profil versehen ist, und wobei die untere Fläche in Kontakt mit dem an den besagten Armen ausgebildeten Sitz (31) steht und in einer Ebene senkrecht zur Entwicklungsrichtung des Befestigungselementes (3) ein halbkreisförmiges Profil aufweist.

5. Pleuelstange (1) nach einem der vorhergehenden Ansprüche, wobei die Keile einen Querschnitt in Gestalt eines rechtwinkligen Dreiecks aufweisen, wobei der Winkel zwischen der Hypotenuse und der Basis des rechtwinkligen Dreiecks einen Wert zwischen 1,4° und 1,6° aufweist.

6. Pleuelstange (1) nach einem der vorhergehenden Ansprüche, wobei der Pleuelkörper aus einem Kunststoff mit mechanischen und thermischen Beständigkeitseigenschaften gebildet ist.

7. Pleuelstange (1) nach einem der vorhergehenden Ansprüche, wobei die beiden Arme (511a, 511b) derart ausgebildet sind, dass sie einen Kreisbogen zwischen sich definieren, und wobei jeder Arm eine prismatische Führung (512), eine Öffnung (513) und einen Sitz (514) aufweist, und wobei die besagte Pleuelstange ferner umfasst
- einen Deckel (520, 520', 520"), der ein Loch (521) und ein Paar Führungen (522) umfasst, mit der Möglichkeit des Entfernens desselben zwischen den besagten beiden Armen (511a, 511b) durch Einführen der prismatischen Führungen (512) des Körpers (510, 510', 510") in den Führungen (522) auf dem Deckel (520, 520', 520"), wobei der besagte Deckel (520, 520', 520") mit einer Kerbe (523) versehen ist, die eine solche Gestalt aufweist, dass die Kerbe beim Einsetzen des Deckels zwischen die beiden Arme (511a, 511b) eine kreisförmige Öffnung (550) mit dem Kreisbogen bildet, der durch die Arme (511a, 511b) gebildet wird,
- zwei Keile (530, 530', 530"), die dazu bestimmt sind, in die Öffnungen (513) des Körpers (510, 510', 510") eingesetzt zu werden, und
- ein Befestigungselement (540, 540', 540") zum Einsetzen in die Bohrung (521) des Deckels (520, 520', 520") und in die Sitze (514) des Körpers (510, 510', 510")
**dadurch gekennzeichnet, dass**
- das Befestigungselement (540, 540', 540") ein balkenförmiges Element ist, dessen Querschnitt von den Enden zur Mitte hin zunimmt, wobei das Befestigungselement (540, 540', 540") in ein Gehäuse (514) des Körpers (510, 510', 510") zwischen zwei Öffnungen (513) eingebracht und mit geeigneten Mitteln aufgenommen wird, um zu vermeiden, dass das besagte Befestigungselement (540, 540', 540") sich in einer Richtung orthogonal zur Gerade a, bewegt,
- die beiden Keile (530, 530', 530") werden mit dem Deckel (520, 520', 520") in Kontakt gebracht und derart angeordnet, dass ihre Kontaktfläche in einer Ebene senkrecht zu einer Gerade liegt, die durch das geometrische Zentrum der kreisförmigen Öffnung (550) verläuft, und
- wenn der Deckel (520, 520', 520") durch Einsetzen der prismatischen Führungen (512) in die Spuren (522) mit dem Körper (510, 510', 510") verbunden ist, werden die beiden Keile (530, 530', 530") in die Öffnungen (513) eingebracht und das Befestigungselement (540, 540', 540") wird in die Bohrung (521) und in die Sitze (514) eingesetzt, wobei der zweiteiliger Träger (500, 500', 500") ist geschlossen und wird in Translation gedrängt.

## Revendications

1. Bielle (1) comprenant:
- un corps de bielle (100) comprenant un trou (60) à une extrémité et deux bras (6,7) à l'extrémité opposée, configurés de manière à définir un arc de cercle entre eux,
- un chapeau de bielle (2) inséré de manière amovible entre lesdits deux bras (6, 7), ledit chapeau de bielle étant pourvu d'une encoche (19a) configurée de telle sorte que, lorsque le chapeau de bielle est inséré entre les deux bras (6, 7), les encoches forment une ouverture circulaire (40) en forme d'arc de cercle formée par les bras du corps de bielle,
- un siège (21, 31) formé sur ledit chapeau de bielle (2) et sur lesdits bras (6, 7), dans lequel est logé un élément de fixation (3),
- deux cales (4,5) insérées dans ledit siège entre l'élément de fixation et le chapeau de bielle,
**caractérisé en ce que**
- l'élément de fixation (3) est un élément en forme de poutre dont la section augmente des extrémités au centre, ledit élément de fixation (3) étant inséré dans un siège (31) du corps 100 entre deux ouvertures (11, 12) et logé par des moyens appropriés pour empêcher ledit élément de fixation (3) de se déplacer dans une direction orthogonale à une droite α passant par le centre géométrique du trou (60) et de l'ouverture circulaire (40),
- les deux ouvertures (11, 12) sont formées respectivement symétriques par rapport à la droite a, et chacune de celles-ci traverse l'épaisseur du bras respectif (6, 7),
- chacune des deux cales (4, 5) est insérée dans le siège à travers un bras correspondant du corps de bielle et est agencée de manière à avoir une surface de contact (31a, 31b) mise en contact avec le chapeau (2) de bielle, la surface de contact (31a, 31b) étant disposée dans un plan orthogonal à la droite a.

2. Bielle (1) selon la revendication 1, dans laquelle le chapeau de bielle est inséré de manière coulissante entre les deux bras (6, 7) au moyen d'un couplage de guidage/voie entre deux côtés du chapeau (2) de bielle et deux côtés des deux bras (6, 7).

3. Bielle (1) selon la revendication 1 ou 2, dans laquelle le siège (31) comprend ledit moyen approprié pour empêcher ledit élément de fixation de se déplacer et comprend deux seconds épaulements (13, 14) se faisant face, et dans lequel chacun desdits seconds épaulements (13, 14) est formé sur un bras correspondant desdits deux bras (6, 7) et est en contact avec une extrémité correspondante (32b, 32a) dudit élément de fixation (3), afin d'empêcher l'élément de fixation (3) de se déplacer dans une direction parallèle à la direction de développement dudit élément de fixation (3).

4. Bielle (1) selon l'une des revendications précédentes, dans laquelle l'élément de fixation (3) est pourvu d'une surface supérieure (31a, 31b) et d'une surface inférieure (30), dans laquelle ladite surface supérieure est en contact avec les deux cales (4, 5) et est muni d'un profil plat, et dans laquelle ladite surface inférieure est en contact avec le siège (31) formé sur lesdits bras et présente, dans un plan orthogonal à la direction de développement de l'élément de fixation (3), un profil semi-circulaire.

5. Bielle (1) selon l'une des revendications précédentes, dans laquelle les cales ont une section en forme de triangle rectangle, dans laquelle l'angle entre l'hypoténuse et la base plus grande du triangle rectangle a une valeur comprise entre 1,4° et 1,6°.

6. Bielle (1) selon l'une des revendications précédentes, dans laquelle le corps de bielle est en matière plastique ayant des propriétés de résistance mécanique et thermique.

7. Bielle (1) selon l'une des revendications précédentes, dans laquelle les deux bras (511a, 511b) sont formés de manière à définir un arc de cercle entre eux, et chaque bras comprend un guide prismatique (512), une ouverture (513) et un siège (514), et ladite bielle comprend en outre
- un chapeau (520, 520', 520 ") comprenant un trou (521) et une paire de guides (522) est destiné à être inséré avec possibilité de retrait entre lesdits deux bras (511a, 511b) par insertion des guides prismatiques (512) du corps (510, 510', 510") dans les guides (522) sur le chapeau (520, 520', 520"), ledit chapeau (520, 520', 520") étant pourvu d'un encoche (523) de forme telle que, lorsque le chapeau est inséré entre les deux bras (511a, 511b), l'encoche forme une ouverture circulaire (550) avec l'arc de cercle formé par les bras (511a, 511b),
- deux cales (530, 530', 530 ") destinées à être insérées dans les ouvertures (513) du corps (510, 510', 510"), et
- un élément de fixation (540, 540', 540") destiné à être inséré dans le trou (521) du chapeau (520, 520', 520") et dans les sièges (514) du corps (510, 510', 510"),
**caractérisé en ce que**
- l'élément de fixation (540, 540', 540") est un élément en forme de poutre dont la section augmente des extrémités vers le centre, ledit élément de fixation (540, 540', 540") étant inséré dans un siège (514) du corps (510, 510', 510") entre deux ouvertures (513) et logé avec des moyens appropriés pour empêcher audit élément de fixation (540, 540', 540") de se déplacer dans une direction orthogonale à la droite a,
- les deux cales (530, 530', 530") sont mises en contact avec le chapeau (520, 520', 520") et sont disposées de telle sorte que leur surface de contact est située dans un plan orthogonal à une droite passant par le centre géométrique de l'ouverture circulaire (550), et
- lorsque le chapeau (520, 520', 520") est couplé au corps (510, 510', 510") en insérant les guides prismatiques (512) dans les guides (522), les deux cales (530, 530', 530 ") sont insérées dans les ouvertures (513) et l'élément de fixation (540, 540', 540") est inséré dans le trou (521) et dans les sièges (514), et le support en deux parties (500, 500', 500") est fermé et forcé à se déplacer.
